# EUROPEAN PATENT APPLICATION

(11) **EP 1 455 429 A1**
(43) Date of publication of application: **08.09.2004**
(21) Application number: 01275020.4
(22) Date of filing: 19.12.2001
(51) Int. Cl.: H02H 3/38, H04Q 9/10

(54) **GROUND-FAULT PROTECTION COORDINATING SYSTEM AND GROUND-FAULT CIRCUIT INTERRUPTER WITH GROUND-FAULT PROTECTION COORDINATING UNIT**

(71) Applicant: MITSUBISHI DENKI KABUSHIKI KAISHA, Tokyo 100-8310 (JP)
(72) Inventor: Ishii, Yasuhiro, c/o Mitsubishi Denki KK, Chiyoda-ku, Tokyo 100-8310 (JP)
(74) Representative: HOFFMANN - EITLE
(86) International application number: PCT/JP2001/011125
(87) International publication number: WO 2003/052897

(57) **Abstract**

A hierarchical stage in a power distribution system to which an earth-fault-protection apparatus 40 is connected is set by hierarchical stage level setting means 42, and a carrier signal indicating a hierarchical stage level is output to a power distribution line 1 when any earth fault detection signal is sent from carrier transmission means 43 through power distribution line carrier communication. A carrier signal from the other earth-fault-protection apparatus is detected by carrier detection means 44, and an interrupt operation is switched and interlocked to a time-delay operation when any signal indicating a lower level than its hierarchical stage level is present in the carrier signals; and the interrupt operation is switched and interlocked to an instant interrupt operation when any signal indicating a lower level than its hierarchical stage level is absent.

## Description

### Technical Field

The present invention relates to an earth-fault-protection cooperation system for conducting cooperation between earth-fault-protection apparatuses or earth leakage breakers, which are located at various stages in hierarchy of a power distribution system, and to an earth-fault-protection cooperation unit-equipped earth leakage breaker.

### Background Art

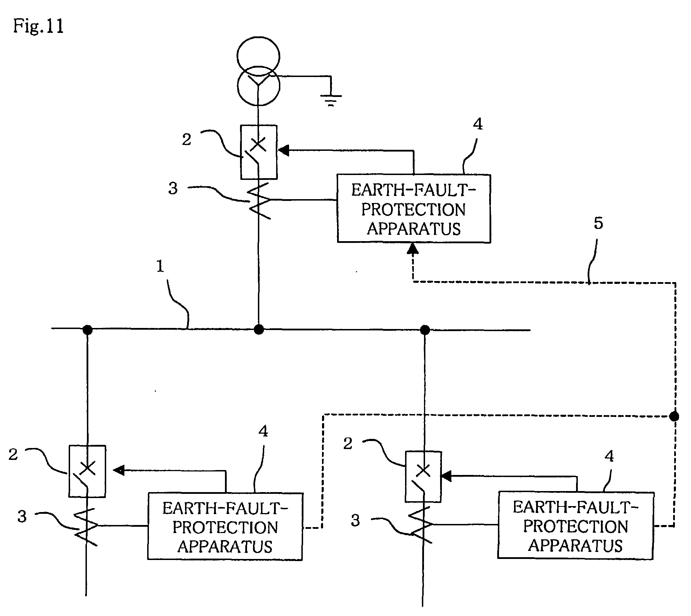

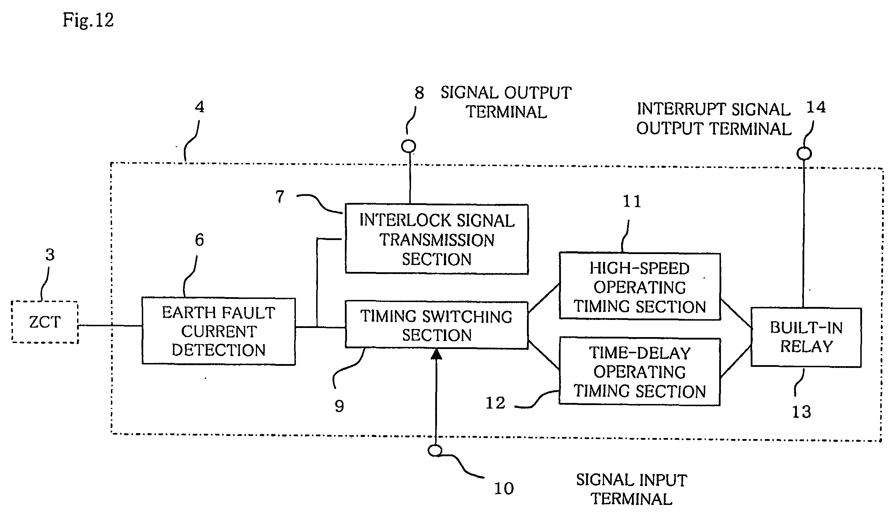

Fig. 11 is a diagram showing a constitution of an earth-fault-protection cooperation system by means of a general earth-fault-protection apparatus. Fig. 12 is a block diagram showing an internal constitution of a conventional earth-fault-protection apparatus.

In the drawings, reference numeral 1 designates a power distribution line branched off and distributed from a receiving transformer. Numeral 2 designates a circuit breaker connected to key points of a branch power distribution. Numeral 3 designates a zero-phase current transformer (ZCT) for detecting an earth fault current of the distribution line 1. Numeral 4 designates an earth-fault-protection apparatus located in the proximity of each circuit breaker 2. Numeral 5 designates a signal line for transmitting, e. g., an interlock signal between respective circuit breakers 2 and earth-fault-protection apparatus 4. Numeral 6 designates an earth fault current detection section. Numeral 7 designates an interlock signal transmission section for transmitting an interlock signal in response to an earth fault detection signal from the earth fault current detection section 6. Numeral 8 designates a signal output terminal for transmitting an interlock signal to outside. Numeral 9 designates a timing switching section. Numeral 10 designates a signal-input terminal for receiving a timing selection signal of the timing switching section 9. Numeral 11 designates a high-speed operating timing section. Numeral 12 designates a time-delay operating timing section. Numeral 13 designates a built-in relay for generating an open signal toward the circuit breaker 2. Numeral 14 designates an interrupt signal output terminal for transmitting an interrupt signal to the circuit breaker 2.

Now, operation of the conventional earth-fault-protection cooperation system is described. In the case where magnitude of an earth fault current detected by the zero-phase current transformer (ZCT) 3 exceeds a predetermined value, the earth fault current detection section 6 transmits an earth fault detection signal to the interlock signal transmission section 7 and the timing switching section 9. The interlock signal transmission section 7 transmits the signal from the signal output terminal 8, thereby informing the other earth-fault-protection apparatus 4, which are located at upper level (upstream) in hierarchy of the power distribution system, of any earth fault detection. The timing switching section 9 inputs from the signal input terminal 10 an interlock signal, which is transmitted from the other earth-fault-protection apparatus 4 located at lower level (downstream) in hierarchy of the power distribution system, and normally selects "a high-speed operation" from the high-speed operating timing section 11. In the case, however, where a received signal is present, the timing switching section 9 selects "a time-delay operation" toward the time-delay operating timing section 12. Then, when any selected timing reaches a predetermined time period, the timing switching section 9 causes the built-in relay 13 to operate, and outputs an interrupt signal to the circuit breaker 2 via the interrupt signal terminal 14.

Since the circuit breaker 2, the zero-phase current transformer (ZCT) 3 for detecting the earth fault, and the earth-fault-protection apparatus 4 are located at every branch key point of the power distribution system, the system is arranged as follows. That is, the earth-fault-protection apparatus 4, which is located at lower level in the power distribution system, possesses a function of transmitting an interlock signal when detecting the earth fault. The earth-fault-protection apparatus 4, which is located at upper in the power distribution system, possesses a function of receiving the foregoing interlock signal. The signal line 5, which is disposed in a dedicated way, provides a connection between respective earth-fault-protection apparatus 4 located at upper and lower levels.

Next, operation in this constitution is described. In such a power distribution system, upon occurrence of any earth fault in a certain branch circuit, the earth-fault-protection apparatus 4 detects the earth fault, outputs an interrupt signal in a high-speed operation to bring the circuit breaker 2 placed side by side into interruption at once, and causes the circuit breaker 2 to operate so as to interrupt the branch circuit where the earth fault occurs. At the same time, the earth-fault-protection apparatus 4 informs the earth-fault-protection apparatus 4, which is located at upper level, of the fact that the earth fault has been detected in its system through the signal line 5. At the earth-fault-protection apparatus 4, which is located at upper level in the power distribution system, the earth fault occurred in a lower level branch circuit is detected also by means of an upper level ZCT3.

Generally, the upper level the earth-fault-protection apparatus 4 is located, the less sensitive to the earth fault detection it is set. Thus, the upper level earth-fault-protection apparatus 4 is arranged not to operate before the lower level earth-fault-protection apparatus 4 does. However, depending on earth fault current phase, there may be a case where the upper level earth-fault-protection apparatus 4 operates before, otherwise the upper and lower level earth-fault-protection apparatus 4 operate at the same time to exert a power outage on the other branch circuits. To prevent such problems, an interlock signal is provided through the signal line 5 from the lower level earth-fault-protection apparatus 4 to the upper level earth-fault-protection apparatus 4. The upper level earth-fault-protection apparatus 4 switches to "time-delay operation" to lengthen its interrupt operation time period and transmits an interrupt signal to the circuit breaker 2 of the foregoing upper level earth-fault-protection apparatus 4 after a predetermined time-delay time period has passed.

As a result, the lower level circuit breaker 2 interrupts a lower level circuit at once upon occurrence of the earth fault in response to a high-speed operation interrupt signal from the earth-fault-protection apparatus 4 located at lower level. The earth fault state is eliminated before the upper level earth-fault-protection apparatus 4 reaches a time-delay operation time period thereof so that the upper level circuit breaker 2 does not perform an interrupt operation. Therefore, feeding power to the other branch circuit is continued.

In this manner, in the case of an earth fault occurred in the lower level regions of the power distribution system, only the lower level circuit breaker 2 where the earth fault occurs performs an interrupt operation, and feeding power to the other sound branch circuit can be continued. Whereas, in the case of occurring an earth fault in the upper level regions of the power distribution system, the upper level circuit breaker 2 performs an interrupt operation, thereby causing the circuit breaker 2 nearest the earth fault occurrence point in accordance with position of the earth fault occurring. Thus, an earth-fault-protection cooperation operation is realized.

In the conventional earth-fault-protection cooperation system, as shown in, e.g., the Japanese Patent Publication No. 16715/2001, a signal line provides a connection between respective earth-fault-protection apparatus located at lower level and earth-fault-protection apparatus located at lower level to transmit interlock signals, thereby realizing an earth-fault-protection cooperation operation. However, a problem exits in that it is necessary to lay a dedicated signal line in addition to a power distribution line.

### Disclosure of Invention

The present invention was made to solve such a problem, and has and object of achieving an earth-fault-protection cooperation operation in which any dedicated signal line is not required, only a breaker nearest an occurrence point of an earth fault is brought into an open operation, while feeding power to the other sound circuit is continued.

To accomplish the foregoing object, the invention provides an earth-fault-protection cooperation system provided with a breaker, and an earth-fault-protection apparatus that generates an earth fault detection signal when an earth fault current exceeds a predetermined level as well as a predetermined timing and outputs an interrupt signal to the mentioned breaker, at each of key points in hierarchical stages of a power distribution system, the mentioned each earth-fault-protection apparatus including:
hierarchical stage level setting means for setting a hierarchical stage level for itself in the mentioned power distribution system;
carrier transmission means for transmitting to a carrier signal, on which a signal corresponding to the hierarchical stage level set at the mentioned hierarchical stage level setting means is superimposed, to a power distribution line of the mentioned power distribution system when the mentioned earth fault detection signal is generated;
carrier detection means for detecting a carrier signal that is sent from the carrier transmission means of the other earth-fault-protection apparatus, and transmitted via the mentioned power distribution line; and
operation timing switching means for selectively switching an interrupt operation of the mentioned breaker to a time-delay operation or to an instant interrupt operation based on a signal detected by the mentioned carrier detection means.

The invention also provides an earth-fault-protection cooperation unit-equipped earth leakage breaker including: an earth leakage breaker that detects, by leakage current detection means, that an earth fault current or a leakage current in a power distribution circuit connected to a power distribution system exceeds a predetermined level and a predetermined timing and interrupts the mentioned power distribution circuit; and an earth-fault-protection unit combined with the mentioned earth leakage breaker; and in which
the mentioned earth-fault-protection cooperation unit is provided with hierarchical stage level setting means for setting a hierarchical stage level based on which the mentioned earth leakage breaker is connected in the mentioned power distribution system; and multi-carrier transmission means and multi-carrier detection means for conducting a power distribution line carrier communication using a plurality of carrier frequency signals on a power distribution line to which the mentioned earth leakage breaker is connected;
a carrier frequency signal corresponding to the hierarchical stage level set at thementioned hierarchical stage level setting means is selected and outputted to the mentioned power distribution line in response to a leakage detection signal from the mentioned leakage current detection means of the mentioned earth leakage breaker; and
a carrier frequency signal that is sent from the other earth-fault-protection cooperation unit and transmitted via the mentioned power distribution line is detected, and an interrupt operation of the mentioned earth leakage breaker is selectively switched to a time-delay operation or an instant interrupt operation based on a detected carrier frequency signal.

According to this invention, since an earth fault detection signal is transmitted to the earth-fault-protection apparatus or the earth leakage breaker in each connection of the hierarchical stages using a power distribution line carrier communication, it is possible to realize a desired earth fault cooperation operation without laying any dedicated signal line in addition to the power distribution line.

Furthermore, since the earth-fault-protection cooperation unit-equipped earth leakage breaker integrally formed of the earth-fault-protection cooperation unit and the earth leakage breaker is simply connected to every branch key point in respective hierarchical stages of the power distribution system, it is possible to readily perform a leakage protection cooperation function.

### Brief Description of Drawings

Fig. 1 is a diagram showing a constitution of an earth-fault-protection cooperation system according to the present invention.
Fig. 2 is a block diagram showing an internal constitution of an earth-fault-protection apparatus according to a first preferred embodiment.
Fig. 3 is a conditional truth table of a breaker operation in the first embodiment.
Fig. 4 is a block diagram showing an internal constitution of an earth-fault-protection apparatus according to a second embodiment of the invention.
Fig. 5 is a circuit diagram showing a constitution of a multi-carrier transmission section in the second embodiment.
Fig. 6 is a circuit diagram showing a constitution of a multi-carrier detection section in the second embodiment.
Fig. 7 is a chart showing allocation of carrier frequency signals according to the second embodiment.
Fig. 8 is a chart showing allocation of carrier frequency signals according to a third embodiment of the invention.
Fig. 9 is a block diagram showing a constitution of an earth-fault-protection cooperation unit-equipped earth leakage breaker according to a fourth embodiment of the invention.
Fig. 10 is a top plan view of an earth-fault-protection cooperation unit-equipped earth leakage breaker according to the fourth embodiment.
Fig. 11 is a diagram showing a constitution of an earth-fault-protection cooperation system by means of the conventional earth-fault-protection apparatus.
Fig. 12 is a block diagram showing an internal constitution of the earth-fault-protection apparatus according to the prior art.

### Best Mode for Carrying Out the Invention

Several preferred embodiments according to the present invention are hereinafter described in detail referring to the accompanying drawings.

### Embodiment 1.

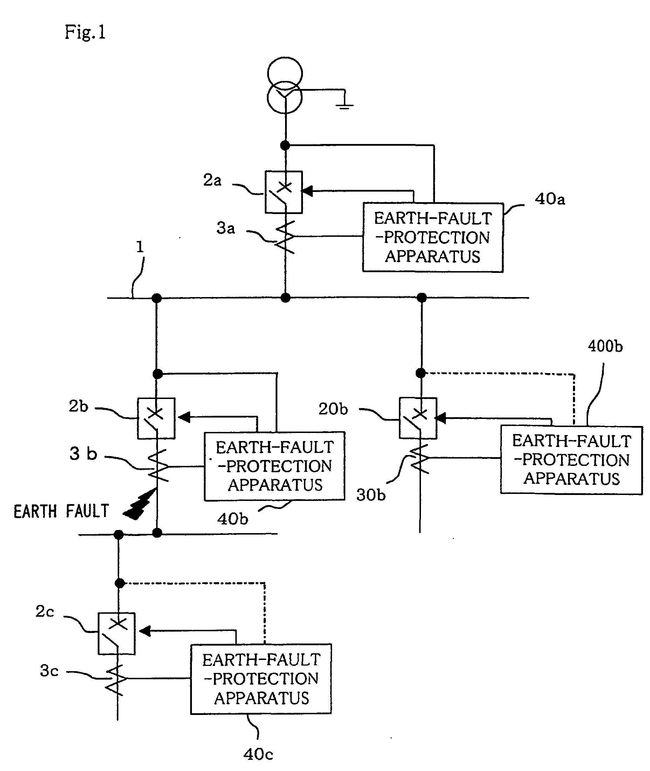

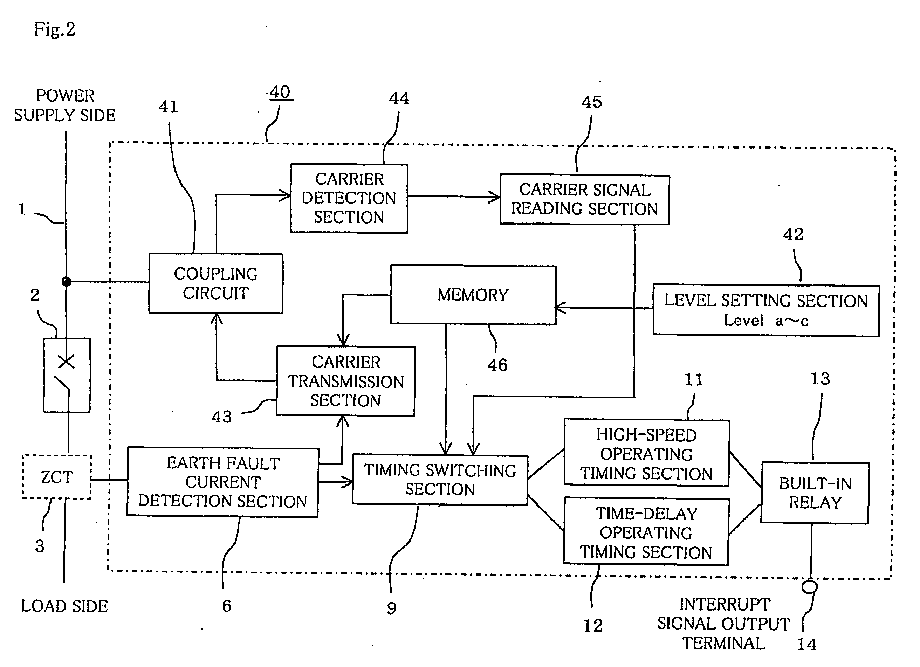

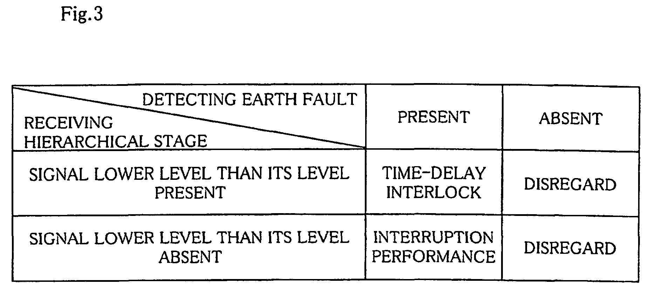

Fig. 1 is a diagram showing a constitution of an earth-fault-protection cooperation system of the invention, Fig. 2 is a block diagram showing an internal constitution of an earth-fault-protection apparatus according to a first embodiment of the invention, and Fig. 3 is a conditional truth table of a breaker operation. In the diagrams, reference numerals 1-3, 6, 9-14 designate like parts as in the foregoing description of the above-mentioned conventional device. Numerals 40, 400 designate an earth-fault-protection apparatus. In the description of the invention, to clear an installed hierarchical stage level in a power distribution system of a group of circuit breaker 2, ZCT 3, and earth-fault-protection apparatus 40, 400, assistant codes a-c corresponding to respective hierarchical stage levels are used. For the purpose of level determination described later, the codes themselves are to have meaning in terms of magnitude (large and small) so as to be capable of determining that "a" is upper level, and "c" is lower level (for example, a>b>c).

In addition, numerals 20b, 30b, 400b designate a circuit breaker, ZCT, and earth-fault-protection apparatus connected in the same hierarchical stage level of the power distribution system as the circuit breaker 2b, ZCT 3b, and earth-fault-protection apparatus 40b.

Numeral 41 designates a coupling circuit in order to send and receive a power line communication signal to and from the power distribution line 1. Numeral 42 designates a level setting section. This level setting section 42 selects a hierarchical stage level (any of "a"-"c" in this embodiment) at which the foregoing earth-fault-protection apparatus 40 is located in the power distribution system. A code of the selected hierarchical stage level is stored in a memory 46, and read out when required.

Numeral 43 designates a carrier transmission section. When the earth fault current detection section 6 determines an earth fault occurrence, this carrier transmission section transmits a carrier signal, on which a hierarchical stage level identification code enabling to identify any hierarchical stage level of "a-c" corresponding to a hierarchical stage level set at the level setting section 42 and stored in the memory 46, to the power distribution line 1 via the coupling circuit. For example, in the case where the earth-fault-protection apparatus 40 is located at the second hierarchical stage level in the power distribution system, a hierarchical stage identification code "b" is set at the level setting section 42, and the carrier transmission section 43 transmits a carrier signal including the hierarchical stage identification code "b" stored in the memory 46. Herein, it is also preferable that the carrier is in a telegram form.

Numeral 44 designates a carrier detection section, and numeral 45 designates a carrier signal reading section. The carrier detection section 44 detects a carrier signal transmitted from the other earth-fault-protection apparatus 40 to the power distribution line 1, and transmits the detected carrier signal to the carrier signal reading section 45. The carrier signal reading section 45 extracts a hierarchical stage identification code in which the earth fault is detected, and which code is included in this carrier signal, and transmits it to the timing switching section 9.

For example, in the case where the earth-fault-protection apparatus 40b detects any earth fault via the ZCT 3b located at the second hierarchical stage level, the earth-fault-protection apparatus 40b sends a carrier signal, on which a hierarchical stage identification code "b" on a carrier frequency signal from the carrier transmission section 43 is superimposed, to the power distribution line 1. At this time, the ZCT 3a, which is located at an upper level in hierarchical stages, detects the earth fault as well, and therefore the earth-fault-protection apparatus 40a sends a carrier signal, on which a hierarchical stage identification code "a" from the carrier transmission section 43 is superimposed, to the power distribution line 1.

That is, a carrier signal, on which its hierarchical stage identification code from the earth-fault-protection apparatus 40 in respective hierarchical stages located in series in the power distribution system where the earth fault occurs is superimposed, is sent onto the power distribution line 1 substantially at the same time.

A carrier signal having been sent onto the power distribution line 1 is detected by each carrier detection section 44 of all the earth-fault-protection apparatus 40a, 40b, 40c, 400b connected to the power distribution line 1.

Each carrier signal reading section 45 performs a telegram analysis of a carrier signal, detects respective hierarchical stage identification codes "a" and "b", and transmits a result thereof to the timing switching section 9. The timing switching section 9 compares these hierarchical stage identification codes with a hierarchical stage level identification code set to itself. Determination of whether a hierarchical stage level is upper or lower is just carried out in comparison of magnitude because the above-described codes themselves create meaning in terms of large and small (for example, a>b>c) thereby enabling to speed up a determination processing.

Now, selection between "instant interrupt operation" and "time-delay operation" (time-delay interlock) is described with reference to the conditional truth table of Fig. 3.

The timing switching section 9 within the earth-fault-protection apparatus 40 is arranged to operate under AND condition of two types of signals from the earth fault current detection section 6 and the carrier signal reading section 45. Accordingly, the earth-fault-protection apparatus (400b, 40c in the example of Fig. 1), which are located in a sound circuit not involved in the earth fault, do not detect the earth fault, and therefore they do not operate at all even if they receive a carrier signal.

In the timing switching section 9, on the basis of the conditional truth table of Fig. 3, "time-delay operation" is selected in the case of detecting any signal level lower than a hierarchical stage level set to itself. On the other hand, in the case where a signal level lower than its hierarchical stage level and not including its hierarchical stage level is not detected, "instant interrupt operation" is selected.

The earth-fault-protection apparatus 40a located at upper level of the power distribution system receives a carrier signal transmitted by the earth-fault-protection apparatus 40a itself and a carrier signal from the earth-fault-protection apparatus 40b to perform a telegram analysis. Then the hierarchical stage identification codes of both "a" and "b" are detected and compared with the hierarchical stage level "a" set to itself. As the lower level code "b" exists, the timing switching section 9 selects "time-delay operation". In this case, as far as it is a code indicating a lower level, the timing switching section 9 selects "time-delay operation" even if it is code "c".

On the other hand, when hierarchical stage identification codes having received and analyzed is code "a" and code "b", and any code indicating a level lower than the hierarchical stage level of the earth-fault-protection apparatus 40b itself and not including its hierarchical stage level does not exist, the earth-fault-protection apparatus 40b selects "instant interrupt operation". Thus, the circuit breaker 2b, which is the earth fault occurrence circuit, is brought into an instant interrupt operation via the high-speed operating timing section 11.

In this manner, although the circuit where the earth fault has occurred is interrupted, feeding power to the other sound circuit can be continued.

### Embodiment 2.

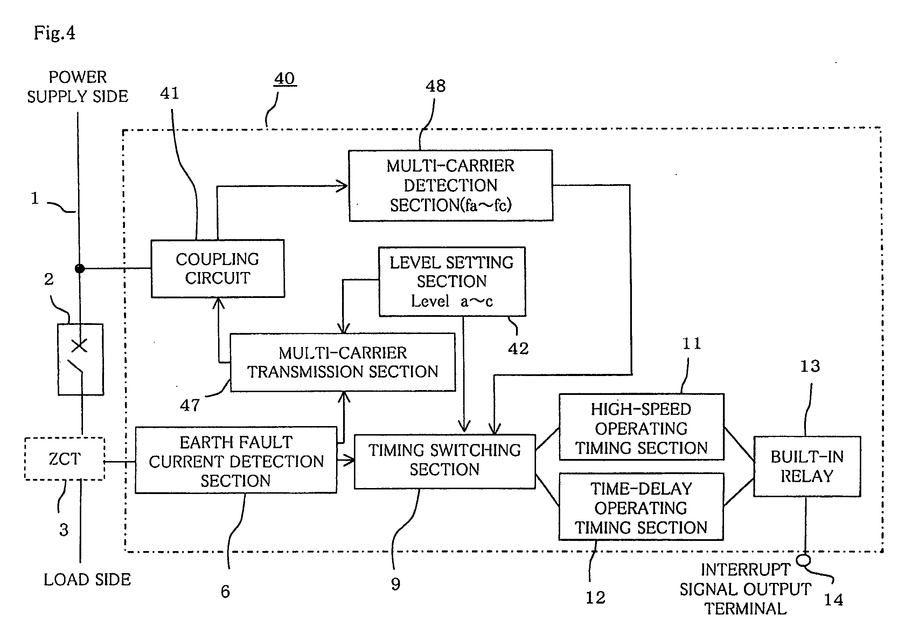

Fig. 4 is a block diagram showing an internal constitution of an earth-fault-protection apparatus according to a second preferred embodiment of this invention. In the drawing, reference numerals 1-3, 6, 9-14, 40-42 designate like parts as in the description of the above-mentioned first embodiment.

Numeral 47 designates a multi-carrier transmission section capable of transmitting selectively a plurality of carrier frequency signals. Numeral 48 designates a multi-carrier receiving section capable of receiving simultaneously a plurality of carrier frequency signals.

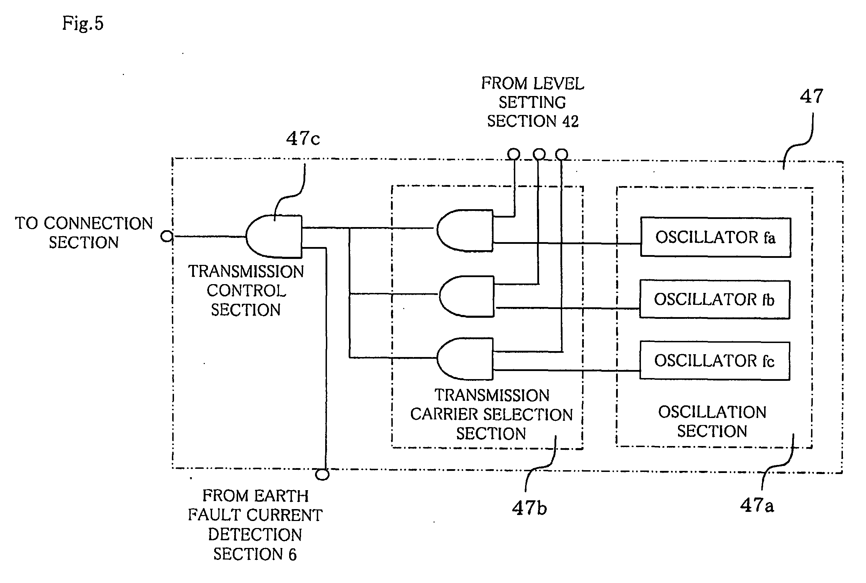

Fig. 5 is a diagram showing a constitution of the multi-carrier transmission section 47. In the drawing, numeral 47a designates a transmission section for generating a plurality of carrier signals (fa-fc) corresponding to each hierarchical stage in a power distribution system. Numeral 47b designates a transmission carrier selection section for selecting a signal of the transmission section 47a in response to the signal from the level setting section 42. Numeral 47c designates a transmission control section for starting/stopping transmission of a carrier signal in response to the signal from the earth fault current detection section 6.

When receiving a signal of the earth fault occurring from the earth fault current detection section 6, the multi-carrier transmission section 47 transmits any of carrier frequency signals "fa" to "fc" corresponding to hierarchical stage levels set at the level setting section 42 to the power distribution line 1 via the coupling circuit 41.

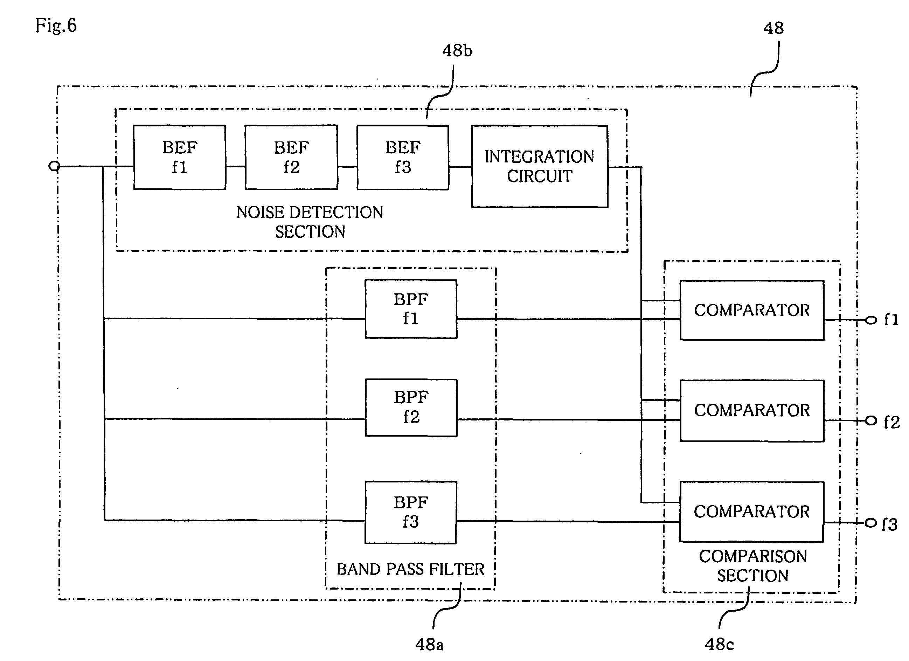

Fig. 6 is a diagram showing a constitution of the multi-carrier detection section 48. In the drawing, numeral 48a designates a band pass filter provided for each of the plurality of carrier frequency signals (fa-fc) corresponding to each hierarchical stage in the power distribution system. Numeral 48b a noise detection section for filtering out a signal component of each carrier frequency signal with a band eliminate filter, and determines a level of noise of the power distribution system. Numeral 48c designates a comparison section for comparing a noise level of the noise detection section and each carrier frequency signal level.

The multi-carrier detection section 48 inputs a carrier signal transmitted from the other earth-fault-protection apparatus 40, and compares each carrier frequency signal individually with a level of noise of the power distribution system. Thus, whether a carrier signal (fa-fc) is present "1" or absent "0" is determined and informed to the timing switching section 9.

When receiving a signal of the earth fault occurrence from the earth fault current detection section 6, the multi-carrier transmission section 47 transmits any carrier frequency signal of fa to fc corresponding to a hierarchical stage level set at the level setting section 42 to the power distribution line 1 via the coupling circuit 41. The multi-carrier detection section 48 detects a carrier frequency signal transmitted from the other earth-fault-protection apparatus 40.

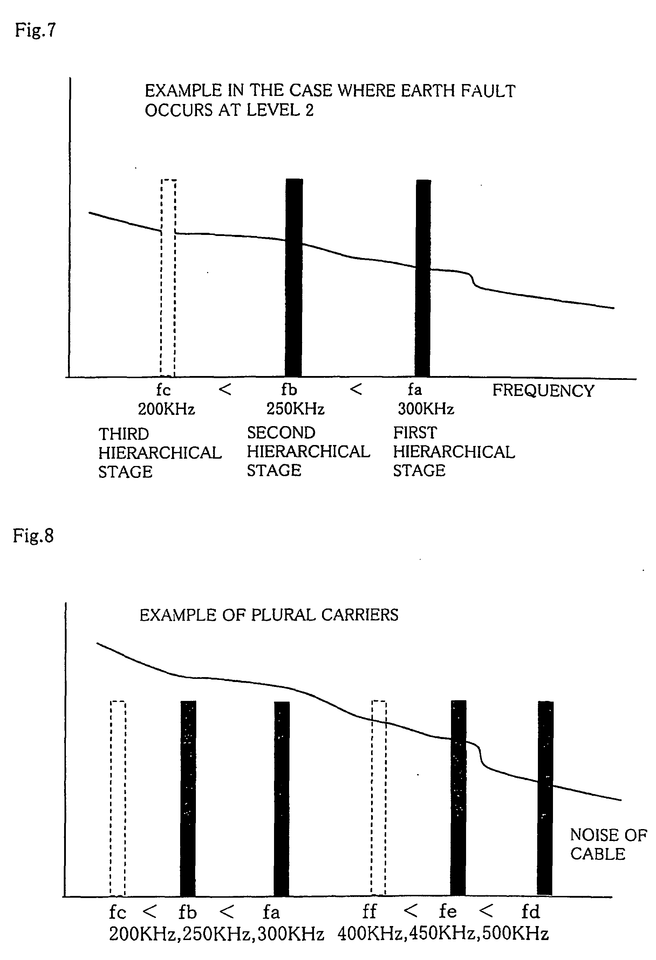

Fig. 7 shows allocation of a carrier frequency signal according to the second embodiment. In this example, the power distribution system is constituted of three hierarchical stages so that description is made, allocating "a" to the first hierarchical stage, "b" to the second hierarchical stage, and "c" to the third hierarchical stage. Herein, magnitude of carrier frequency signals are set to be fa>fb>fc in hierarchical stage order. However, it is preferable to set in reverse order.

In the case where the earth-fault-protection apparatus 40b is located so that its hierarchical stage in the power distribution system may be at the second level, "b" is set at the level setting section 42.

For example, in the case where the earth-fault-protection apparatus 40b detects an earth fault, the earth fault detection signal is transmitted to the timing switching section 9 from the earth fault current detection section 6, and the earth-fault-protection apparatus 40b sends the carrier frequency signal fb to the power distribution line 1 from the multi-carrier transmission section 47.

Further, since the ZCT 3a, which is located at an upper level than the earth-fault-protection apparatus 40b, also detects the earth fault, the earth-fault-protection apparatus 40a detects the earth fault as well, and the carrier frequency signal fa indicating the first level is sent from the multi-carrier transmission section 47 of the earth-fault-protection apparatus 40a.

A plurality of transmitted carrier frequency signals are detected at the multi-carrier detection section 48 of all the earth-fault-protection apparatus 40a, 40b, 40c, 400b connected to the power distribution line 1.

A value of the plurality of carrier frequency signals, which are detected at the multi-carrier detection section 48 of each earth-fault-protection apparatus 40, indicates a hierarchical stage level as it is.

Also in the second embodiment, an operation conditional truth at the timing switching section 9 is the same as in the above-mentioned conditional truth table of Fig. 3. It is also the same as in the first embodiment that the timing switching section 9 operates under AND condition of two types of signals from the earth fault current detection section 6 and the multi-carrier detection section 48. Accordingly, the earth-fault-protection apparatus (400b, 40c in the example of Fig. 1), which are located in a sound circuit not involved in the earth fault, do not detect the earth fault, and therefore they do not operate at all even if they receive a carrier signal.

On the other hand, an earth-fault-protection apparatus (40a, 40b in the example of Fig. 1) involved in the earth fault conducts a magnitude comparison between a frequency signal value indicating a hierarchical stage level set to itself and a carrier frequency signal value received and detected. Thus, an earth fault detection hierarchical stage of the other earth-fault-protection apparatus is determined. As a result, when a carrier frequency signal indicating lower level than its hierarchical stage level is present, the timing switching section 9 selects "time-delay operation". When a carrier frequency signal indicating lower level than its hierarchical stage level is absent, the timing switching section 9 selects "instant interrupt operation". The operations after the mentioned one are similar to in the first embodiment, and further description thereof is omitted.

In the above-mentioned first embodiment, an identification code is read out from a telegram of a carrier signal, and a comparison processing of the identification code with its setting level code is carried out, eventually determining whether or not there is any requirement for interlock. Consequently a determination processing takes long. Whereas, in this second embodiment, determination of whether a frequency corresponding to a hierarchical stage level is present or absent can be done in a manner of a magnitude comparison and, therefore, a high-speed processing is achieved resulting in no interlock delay.

### Embodiment 3.

Fig. 8 is a chart showing allocation of a carrier frequency signal according to a third preferred embodiment. Electrical load connected to a power distribution system generates various noises depending on type, power consumption or the like, and sometimes a frequency band, in which carrier signal is hard to reach due to interference with the noise, may be generated. To cope with this problem, a plurality of band blocks different in frequency band are provided as shown in Fig. 8, and carrier frequency signals corresponding to each of hierarchical stage levels are allocated within respective carrier blocks. That is, there are provided "fa" and "fd" as a carrier frequency signal indicating the first hierarchical stage, and the second and third hierarchical stages are indicated likewise. Thus, when detecting the earth fault, a plurality of carrier frequency signals corresponding to the earth fault detection hierarchical stage levels is transmitted simultaneously. The other earth fault detection apparatus having received these signals switches to a time-delay operation in the case of detecting at least one carrier frequency signal indicating a level lower than that of the other earth fault detection apparatus having received the signals. As a result, transmission reliability on an interlock signal can be improved.

### Embodiment 4.

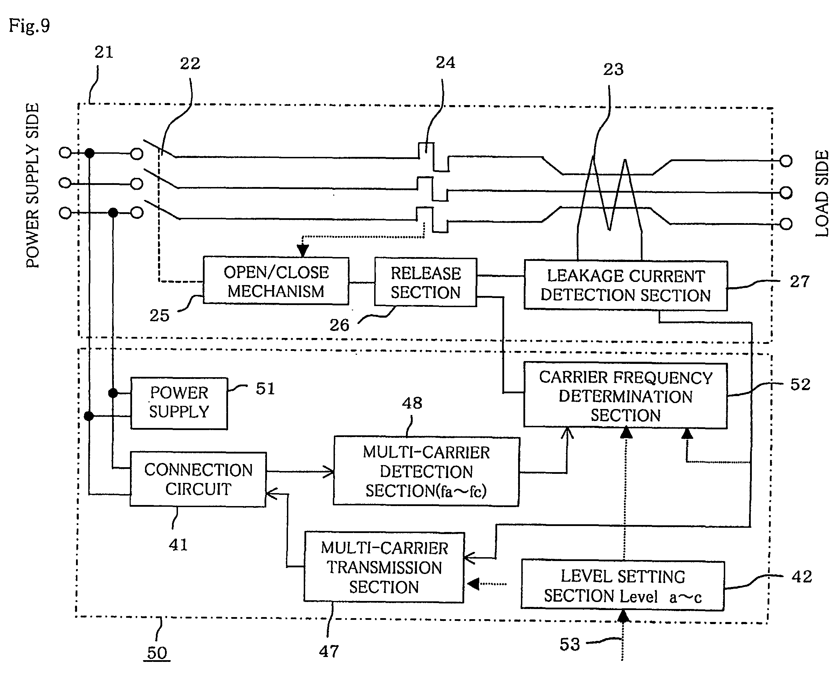

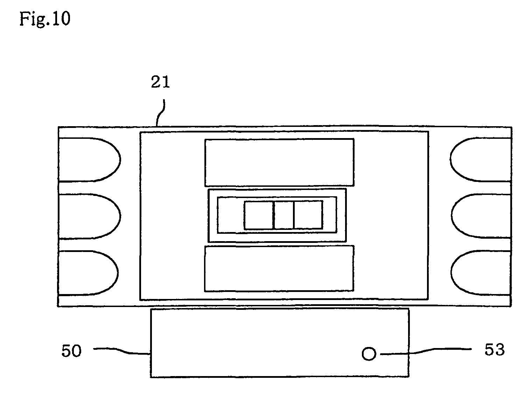

Fig. 9 is a diagram showing a constitution of an earth-fault-protection cooperation unit-equipped earth leakage breaker that includes an earth leakage breaker and an earth-fault-protection cooperation unit attached thereto according to a fourth preferred embodiment of this invention. Fig. 10 is a top plan view of the earth-fault-protection cooperation unit-equipped earth leakage breaker. In the drawings, reference numerals 41, 42, and 47-48 designate like parts as those in the foregoing second embodiment. In this fourth embodiment, leakage equates to an earth fault synonymously.

Numeral 21 designates an earth leakage breaker for interrupting a load at the time of detecting an earth fault (leakage). Numeral 22 designates an open/close contact, numeral 23 designates a zero-phase current transformer (ZCT), and numeral 24 designates an over-current detection section. Numeral 25 designates an open/close mechanism for turning the open/close contact 22 ON/OFF, and numeral 26 designates a release section for transmitting a release command to the open/close mechanism25. Numeral 27 designates a leakage current detection section, which outputs an interrupt signal to the release section 26 to operate the open/close mechanism 25 thereby separating the open/close contact 22 when a level of a leakage current, which is detected at the ZCT 23, exceeds a predetermined value and a predetermined timing.

Numeral 50 designates an earth-fault-protection cooperation unit, and numeral 51 designates a power supply circuit for supplying an electric power to operate the earth-fault-protection cooperation unit 50. Numeral 52 designates a carrier frequency signal determination section, and numeral 53 designates an external setter of the level setting section 42. The earth-fault-protection cooperation unit 50 is integrally attached to the earth leakage breaker 21, and the coupling circuit 41 and power supply circuit 51 are connected on the power supply side with respect to the open/close contact 22 of the earth leakage breaker 21. Therefore, it becomes possible for the earth-fault-protection cooperation unit 50 to acquire an operation power supply and send/receive a carrier signal to and from an upper level power distribution system even after the earth leakage breaker 21 has performed an interrupt operation.

The multi-carrier detection section 48 receives a carrier frequency signal, which is transmitted from the other earth-fault-protection cooperation unit 50 to inform a leakage occurrence, and transmits presence or absence of a carrier frequency signal corresponding to an earth fault detection hierarchical stage level to the carrier frequency signal determination section 52. The carrier frequency signal determination section 52 compares the detected carrier frequency signal with the hierarchical stage level set to itself. In the case where there is any carrier frequency signal of a frequency indicating lower level than its hierarchical stage level, the carrier frequency signal determination section 52 transmits an interlock signal for a time corresponding to a time-delay operation time to the release section 26, and causes an earth leakage breaker to perform the time-delay operation. Further, in the case where there is no carrier frequency signal of a frequency indicating lower level than its hierarchical stage level, the carrier frequency signal determination section 52 does not transmit any interlock signal, and causes the earth leakage breaker to perform the instant interrupt operation.

In the foregoing first and second embodiments, it is necessary to install three apparatus of a breaker, a zero-phase current transformer and an earth fault current detection section at every branch key point of respective hierarchical stages in a power distribution system, and connection of a control line between respective apparatus is also required.

The open/close contact 22, the zero-phase current transformer (ZCT) 23, the over-current detection section 24, the open/close mechanism 25, the release section 26, and the leakage current detection section 27 are incorporated into the earth leakage breaker 21, and many components of a leakage protection cooperation system are also incorporated therein. In the earth-fault-protection cooperation unit-equipped earth leakage breaker according to this fourth embodiment, the other required functions are incorporated into the earth-fault-protection cooperation unit 50, and this earth-fault-protection cooperation unit 50 is integrally combined with the earth leakage breaker 21. Further, the control line is integrally connected with the earth-fault-protection cooperation unit-equipped earth leakage breaker in, e.g., factory. Therefore, only connecting and installing an earth leakage breaker section on a power distribution line of the power distribution system can readily form a leakage protection cooperation system.

In addition, each system that functions the earth-fault-protection cooperation is described in the foregoing embodiments. However, even if the system performs over-current protection cooperation, it is easy to combine an interrupt protection cooperation section, which possesses a function of determining a power distribution line carrier communication and a carrier frequency s ignal, with an electronic circuit breaker in which over-current protection characteristic is a transmission signal and can be selected.

### Industrial Applicability

As has been described above, in the earth-fault-protection cooperation system and an earth-fault-protection cooperation unit-equipped earth leakage breaker according to the invention, an earth-fault-protection cooperation operation in a power distribution system can be easily realized without any dedicated signal line. Consequently, this earth-fault-protection cooperation system and an earth-fault-protection cooperation unit-equipped earth leakage breaker is suitable to be incorporated into a power distribution system and an electric facility of various factories, buildings or the like, and used therein.

## Claims

1. An earth-fault-protection cooperation system provided with a breaker, and an earth-fault-protection apparatus that generates an earth fault detection signal when an earth fault current exceeds a predetermined level as well as a predetermined timing and outputs an interrupt signal to said breaker, at each of key points in hierarchical stages of a power distribution system;
**characterized in that** said each earth-fault-protection apparatus comprises:
hierarchical stage level setting means for setting a hierarchical stage level for itself in said power distribution system;
carrier transmission means for transmitting to a carrier signal, on which a signal corresponding to the hierarchical stage level set at said hierarchical stage level setting means is superimposed, to a power distribution line of said power distribution system when said earth fault detection signal is generated;
carrier detection means for detecting a carrier signal that is sent from the carrier transmission means of the other earth-fault-protection apparatus, and transmitted via said power distribution line; and
operation timing switching means for selectively switching an interrupt operation of said breaker to a time-delay operation or to an instant interrupt operation based on a signal detected by the mentioned carrier detection means.

2. The earth-fault-protection cooperation system according to claim 1, **characterized in that** said operation timing switching means brings said breaker into the time-delay operation in the case where any signal indicating a lower level than its hierarchical stage level is present among signals detected by said carrier detection means; and said operation timing switching means brings said breaker into the instant interrupt operation in the case where any signal indicating a lower level than its hierarchical stage level is absent.

3. The earth-fault-protection cooperation system according to claim 1, **characterized in that** said earth-fault-protection apparatus comprises: multi-carrier transmission means and multi-carrier detection means in order to perform transmit/receive of a plurality of frequencies simultaneously as said carrier transmission means and carrier detection means;
wherein said multi-carrier transmission means selects a carrier frequency signal corresponding to a hierarchical stage level set at said hierarchical stage level setting means and transmits it to said power distribution line when said earth fault detection signal is generated;
said multi-carrier detection means detects a carrier frequency signal that is sent from the other earth-fault-protection apparatus and transmitted via said power distribution line; and
said operation timing switching means brings said breaker into the time-delay operation in the case where said detected carrier frequency signal indicates a lower level than its hierarchical stage level; and said operation timing switching means brings said breaker into the instant interrupt operation in the case where said detected carrier frequency signal indicating a lower level than its hierarchical stage level is absent.

4. The earth-fault-protection cooperation system according to claim 2, **characterized in that** a plurality of carrier frequency signals indicating one hierarchical stage level correspondence are set, said plurality of carrier frequency signals are transmitted when said earth fault detection signal is generated, and said breaker is switched to the time-delay operation in the case of detecting any of said plurality of carrier frequency signals.

5. An earth-fault-protection cooperation unit-equipped earth leakage breaker including: an earth leakage breaker that detects, by leakage current detection means, that an earth fault current or a leakage current in a power distribution circuit connected to a power distribution system exceeds a predetermined level and a predetermined timing, and interrupts said power distribution circuit; and an earth-fault-protection unit combined with said earth leakage breaker;
**characterized in that** said earth-fault-protection cooperation unit comprises: hierarchical stage level setting means for setting a hierarchical stage level based on which said earth leakage breaker is connected in said power distribution system; and multi-carrier transmission means and multi-carrier detection means for conducting a power distribution line carrier communication using a plurality of carrier frequency signals on a power distribution line to which said earth leakage breaker is connected;
a carrier frequency signal corresponding to the hierarchical stage level set at said hierarchical stage level setting means is selected and outputted to said power distribution line in response to a leakage detection signal from said leakage current detection means of said earth leakage breaker; and
a carrier frequency signal that is sent from the other earth-fault-protection cooperation unit and transmitted via said power distribution line is detected, and an interrupt operation of said earth leakage breaker is selectively switched to a time-delay operation or an instant interrupt operation based on the detected carrier frequency signal.

6. The earth-fault-protection cooperation unit-equipped earth leakage breaker according to claim 5, **characterized in that** said earth leakage breaker is brought into the time-delay operation in the case where any signal indicating a lower level than its hierarchical stage level is present in said detected carrier frequency signals; and said earth leakage breaker is brought into the instant interrupt operation in the case where any signal indicating lower level than its hierarchical stage level is absent.

7. The earth-fault-protection cooperation unit-equipped earth leakage breaker according to claim, **characterized in that** a plurality of carrier frequency signals indicating one hierarchical stage level correspondence are set, said plurality of carrier frequency signals are transmitted when said earth fault detection signal is generated, and said earth leakage breaker is switched to the time-delay operation in the case of detecting any of said plurality of carrier frequency signals.
